# EUROPEAN PATENT SPECIFICATION

(11) **EP 3 393 960 B1**
(45) Date of publication and mention of the grant of the patent: **27.01.2021**
(21) Application number: 16879480.8
(22) Date of filing: 16.12.2016
(51) Int. Cl.: E02F 3/36, B66C 3/00

(54) **DEVICE FOR A JIB-CARRIED TOOL AND A SYSTEM THEREOF**
VORRICHTUNG FÜR EIN AUSLEGERGETRAGENES WERKZEUG UND SYSTEM DAFÜR
DISPOSITIF POUR UN OUTIL PORTÉ SUR UNE FLÈCHE DE GRUE ET SYSTÈME ASSOCIÉ

(30) Priority: 22.12.2015 SE 1551709
(43) Date of publication of application: 31.10.2018
(73) Proprietor: Indexator Rotator Systems AB, 922 21 Vindeln (SE)
(72) Inventor: HARR, Joakim, 922 32 Vindeln (SE)
(74) Representative: Ehrner & Delmar Patentbyrå AB
(86) International application number: PCT/SE2016/051278
(87) International publication number: WO 2017/111684

(56) References cited:
- DE-A1-102008 032 603
- DE-A1-102012 220 975
- JP-A- 2009 291 898
- KR-A- 20090 128 234
- KR-A- 20100 022 835
- US-A- 3 210 114
- US-A- 5 071 184
- US-A- 5 908 060
- US-A1- 2015 123 476
- US-B1- 7 735 530

## Description

### Technical Field

The present invention relates to a rotator for a jib-carried tool. The present invention also relates to a system comprising such a rotator for a jib-carried tool.

### Background

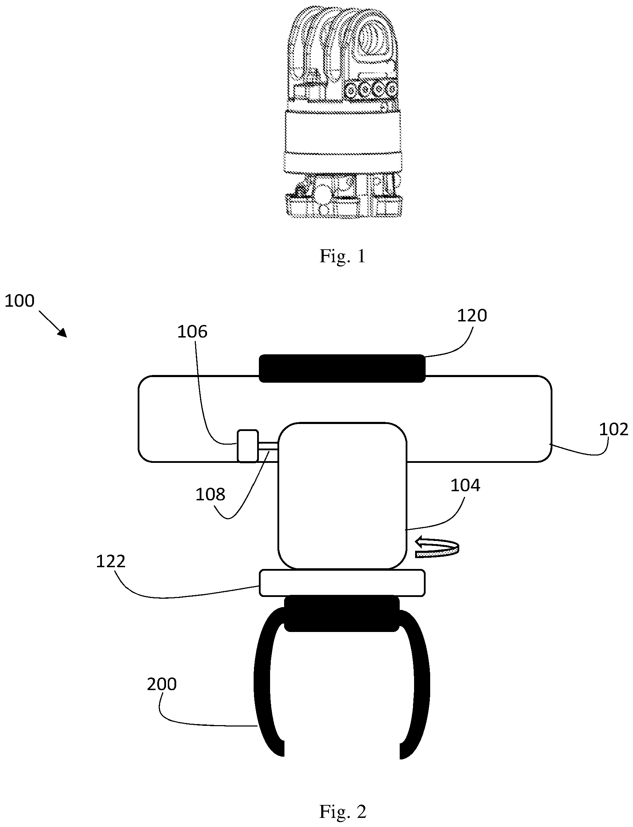

Fig. 1 shows an exemplary rotator known in the art. The rotator is arranged for a jig-carried tool or working implement at an external end of a crane arm or jib. Generally, the rotator comprises a stator and a rotor, wherein the latter rotor is arranged to rotate relative to the stator so as to rotate the jib-carried tool in relation to a rotation axis.

The rotator often carries a hydraulic tool, such as a harvester head of a forest harvester, or a grapple of a forwarder or a truck. The tool is not shown in Fig. 1.

The harvester head often includes a chain saw, two or more knives for removing branches of the stem, feed rollers for grasping the tree, diameter sensors, and a measuring wheel for measuring the stem fed through the harvester head. Modern forest harvesters therefore have advanced electrical functions integrated in the harvester head, such as sensors, control systems (e.g. for controlling hydraulic valves of the harvester head), and processors. Also modern grapples may have integrated electrical functions, such a radioactive detection means. Therefore, the electrical functions have to be fed with electrical power to be able to operate.

It is known in the art to route one or more electrical power cables from the machine (e.g. forest harvester, forwarder and truck) carrying the crane arm or jib to the tool, via the crane arm, for feeding the electrical functions. The power source of the machine is often the driving diesel engine or a diesel engine dedicated for producing electrical power. However, there is large risk of cable breakage with the solution according to prior art. Further, the routing of power cables according to prior art also limits the relative rotation (less than 360 degrees) between the stator and rotor.

Document DE 102012 220975 A1 shows a rotary device for rotating a suspended article.

Document US 3 210 114 A shows an apparatus for orienting a suspended load.

Document KR 2010 0022835 A shows a hook block for a crane.

Document US 7 735 530 B1 shows a rotary dangle head having continuous rotation. US 7 735 530 B1 shows the preamble of the independent claim 1.

### Summary

An objective of embodiments of the present invention is to provide a solution which mitigates or solves the drawbacks and problems of prior art.

Another objective of embodiments of the present invention is to provide a device for a jib-carried tool having the capability to generate and provide electrical power at the device itself.

The above objectives and further objectives are achieved by the subject matter of the independent claim. Further advantageous implementation forms of the present invention are defined by the dependent claims and other embodiments.

According to a first aspect of the invention, the above mentioned and other objectives are achieved with a rotator for a jib-carried hydraulic tool, said rotator comprising:
engagement means for engagement with corresponding engagement means located on the jib-carried tool or on a crane tip;
a stator;
a rotor rotatably arranged relative to said stator; **characterised in** that further comprising a generator; and
transfer means mechanically coupled to said generator, wherein said transfer means is arranged to mechanically transfer the relative rotation between said stator and said rotor to said generator so as to drive said generator.

The rotator according to the first aspect has a number of advantages.

One such advantage is that the relative rotation between the stator and rotor can be used for generating electrical power. The mentioned electrical power can be used at the rotator itself and/or at the tool, hence no extensive power cabling is needed from the machine carrying the jib-carried tool to the tool. The risk of power cable breakage of the power cable routed via the crane arm is therefore eliminated. Moreover, the relative rotation between the stator and rotor is not limited by such power cabling implying theoretical rotation of 360 degrees or more, i.e. more than one full revolution.

In one embodiment of the first aspect, said transfer means is any of a driving axis, a driving belt, a gear wheel, and a friction driver.

In another embodiment of the first aspect, said generator is arranged on said stator and said transfer means is driven by driving means circumferentially arranged on said rotor or on a part arranged to rotate with said rotor, or vice versa. This means that the revers case is also possible, i.e. said generator is arranged on said rotor and said transfer means is driven by driving means circumferentially arranged on said stator or on a part arranged to rotate with said stator.

The advantage with this embodiment is that electrical functions can be powered on the same side of the interface between the stator and the rotor. For example, if the electrical function is located at the stator, the generator is preferably arranged at the stator; and on the other hand if the electrical function is located at the rotor, the generator is preferably arranged at the rotor. Thereby, no power cable has to be routed through the interface between the stator and the rotor eliminating cable breakage.

In yet another embodiment of the first aspect, said driving means is a gear ring or a driving ring.

The advantage with this embodiment is the use of a well working solution for driving, meaning cheap and robust implementation.

In yet another embodiment of the first aspect, said generator is integrated in said stator or in said rotor in a common protective housing of said stator or said rotor.

The advantage with this embodiment is that the generator is well protected under the housing.

In yet another embodiment of the first aspect, the rotator for a jib-carried tool further comprises at least one battery and at least one battery charger being electrically coupled to said generator and further being arranged for charging said at least one battery.

The advantage with this embodiment is that electrical functions can be powered also when the relative rotation is zero. Further, excessive power generated by the generator can be stored in the batteries for later use.

In yet another embodiment of the first aspect, said generator and/or said at least one battery charger is arranged to power at least one electrical function of said rotator and/or said tool.

The advantage with this embodiment is that electrical functions can be powered also when the relative rotation is zero. Further, excessive power generated by the generator can be stored in the batteries for later use.

In yet another embodiment of the first aspect, said hydraulic tool is any of a harvester head or a grapple. The grapple may have radioactive detection means (i.e. an electrical function) in one further embodiment.

In yet another embodiment of the first aspect, said transfer means is arranged to mechanically transfer the relative rotation via a gearbox.

The advantage with this embodiment is that the power generated by the generator is increased since the relative slow rotation is adapted to the working of the generator. Preferably, the number of working revolutions of the generator is increased by means of the gear box.

In yet another embodiment of the first aspect, said rotator is a hydraulic rotator or tilt-rotator.

According to a second aspect of the invention, the above mentioned and other objectives are achieved with a system comprising a rotator for a jib-carried tool according to the first aspect of the present invention and a jib-carried tool. The said system is carried by a forest harvester, a forwarder or a truck in yet another embodiment.

Further applications and advantages of the present invention will be apparent from the following detailed description.

### Brief Description of the Drawings

The appended drawings are intended to clarify and explain different embodiments of the present invention, in which:
- Fig. 1 shows an exemplary rotator;
- Fig. 2 shows an embodiment of the present invention.
- Fig. 3 shows a first cross section of another embodiment of the present invention;
- Fig. 4 shows a second cross section of the embodiment shown in Fig. 3;
- Fig. 5 shows a detailed view of the embodiment shown in Fig. 3 and 4;
- Fig. 6 shows an exploding view of yet another embodiment of the present invention; and
- Fig. 7 shows an exploding view of yet another embodiment of the present invention.

### Detailed Description

Fig. 2 shows a rotator for a jib-carried tool 100 according to the present invention. The present rotator for a jib-carried tool 100 should have the capability of relative rotation between a first part, i.e. a stator 102, and a second part, i.e. a rotor 104. However, the present rotator for a jib-carried tool 100 may also have further capabilities. One such further capability is the possibility of tilting the rotator for a jib-carried tool 100 in relation to a tilting axis (not shown). Such rotators are known in the art as tilt-rotators.

The present rotator for a jib-carried tool 100 comprises at least one stator 102 and at least one rotor 104 which is rotatably arranged relative to the stator 102. The rotor 104 is therefore arranged to rotate relative to the stator 102. A hydraulic rotator is illustrated in Fig. 2. The hydraulic rotator has a hydraulic motor for the rotation of the rotor 104. A number of different types of hydraulic motors are known in the art.

The rotator for the jib-carried tool 100 further comprises a generator 106 and transfer means 108 mechanically coupled to the generator 106. The transfer means 108 is arranged to mechanically transfer the relative rotation between the stator 102 and the rotor 104 to the generator 106 so as to drive the generator 106. Thereby, the generator 106 can generate and output electrical power when the stator 102 and the rotor 104 rotates relative to each other. Any generator that convert mechanical motion to electrical power can be used.

The present rotator for the jib-carried tool 100 further comprises engagement means 120 (or mounting means) for engagement with corresponding engagement means (not shown in Fig. 2) located on the crane tip or jib (not shown in Fig. 2). A link, with or without a swing damper may also be arranged between the crane tip or jib and the present rotator for the jib-carried tool 100.

The present rotator for the jib-carried tool 100 may also comprise means 122 for securing a tool 200 to the present rotator 100 as shown in Fig. 2. The tool 200 in this particular example is a grapple, but the tool 200 is not limited thereof. In one further embodiment of the invention, the tool 200 is a hydraulic tool, such as a hydraulic harvester head or a hydraulic grapple. However, other types of jib-carried tools may be used with the present rotator 100 which is understood by the skilled person.

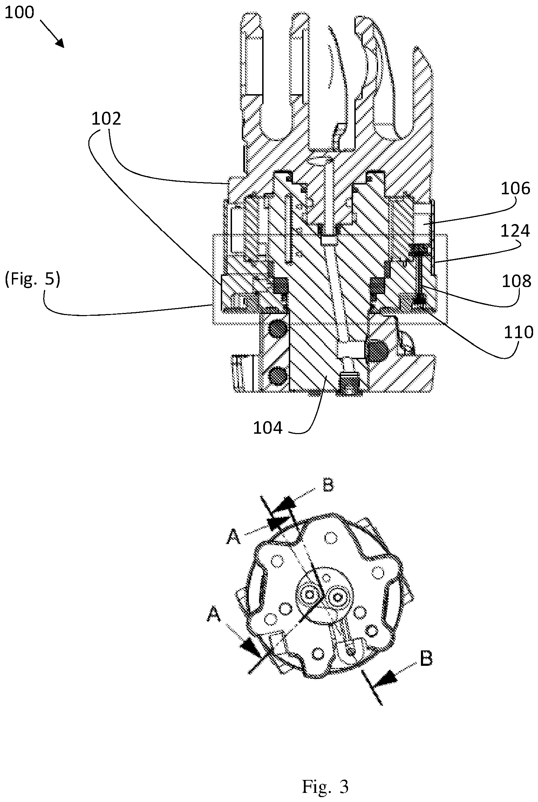

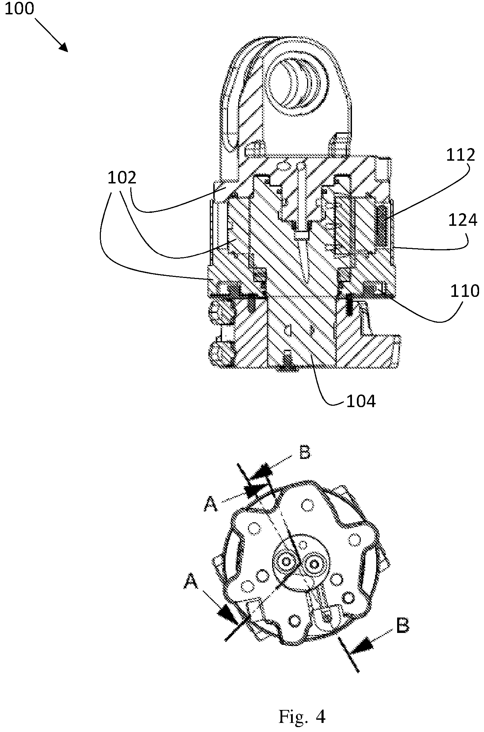

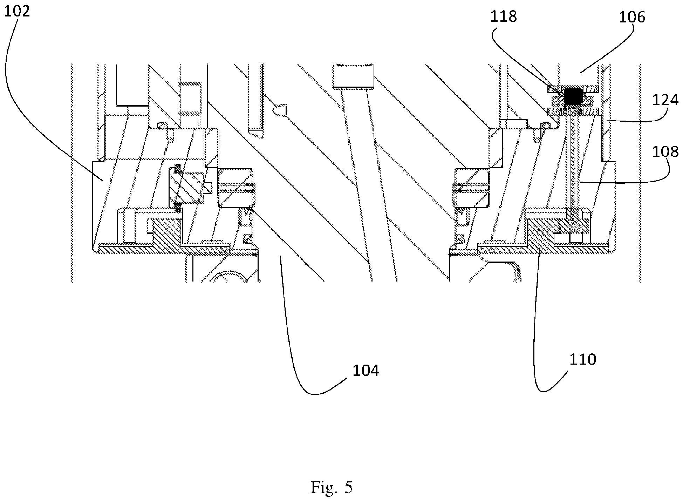

Fig. 3 and 4 show another embodiment of a rotator for a jib-carried tool 100 according to the present invention in a first cross section A-A, according to the lower drawing in Fig. 3, as illustrated in the upper drawing of Fig. 3; and in a second cross section B-B, according to the lower drawing in Fig. 4, as illustrated in Fig. 4. Further, Fig. 5 shows a detailed view of the embodiment shown in Fig. 3 and 4.

The rotator 100 shown in Figs. 3-5 has a driving axis as the transfer means 108. Other types of transfer means 108 may e.g. be driving belts, gear wheels, friction drivers or any other suitable mechanical transfer means 108.

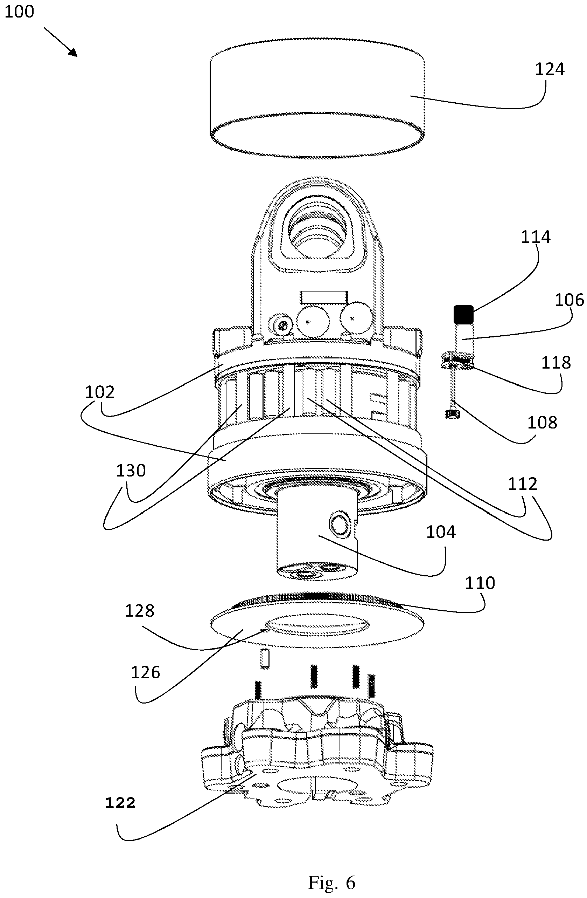

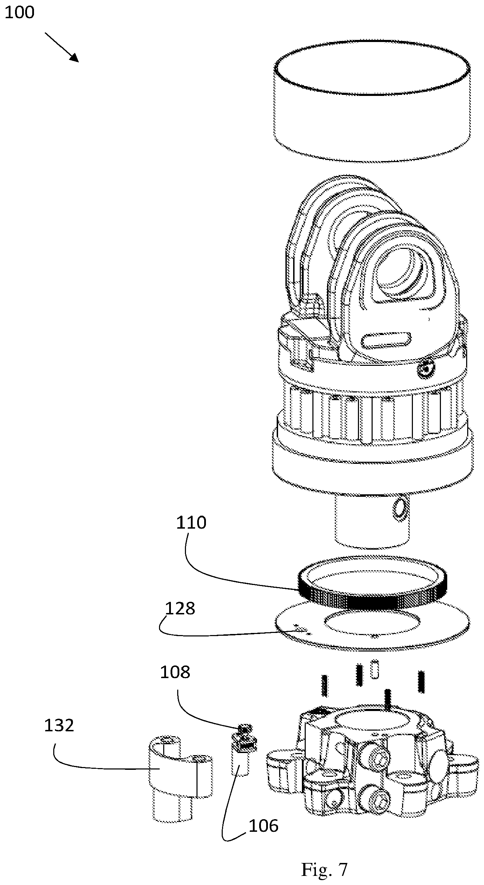

In the embodiment shown in Figs. 2-5, the generator 106 is arranged within the stator 102 and the transfer means 108 is driven by driving means 110 which is circumferentially arranged on the rotor 104 or on a part 116 arranged to rotate with the rotor 104, such as the means 122 for securing a tool 200 to the present rotator 100. The reverse case is also possible, i.e. the generator 106 is arranged at the rotor 104 and the transfer means 108 is driven by driving means 110 which is circumferentially arranged on the stator 102 or on a part arranged to rotate with the stator 104. The circumferentially arranged transfer means is also shown in Fig. 6 and 7. The driving means 110 may be a gear ring, a friction ring or a driving ring according to a further embodiment of the present invention.

Furthermore, the generator 106 is in yet another embodiment of the invention integrated in the stator 102 or in the rotor 104 in a common protective housing 124 of the stator 102 or the rotor 104 depending on the configuration. The stator 102 or the rotor 104 may in this respect include a dedicated recess 130 for holding/supporting the generator 106 and protecting the same.

It is noted that the generator 106 is only capable of producing electrical power when the stator 102 and the rotor 104 rotates relative to each other. Therefore, in one embodiment of the invention, the rotator 100 further comprises at least one battery 112 and at least one battery charger 114 (illustrated in Fig. 6) which is electrically coupled to the generator 106 and the battery 112. The generator 106 and the battery charger 114 setup is arranged for charging the battery 112 when the generator generates electrical power. Thereby, electrical power can be provided to electrical functions at the rotator 100 and/or the tool 200 from the battery 112 when the stator 102 and the rotor 104 does not rotate relative to each other.

The speed of the relative rotation between the stator 102 and the rotor 104 may not be adapted to the generator 106, which may mean that no or a very low electrical power is generated by the generator 106. One solution to this issue is the use of a gearbox 118. In one embodiment of the invention, the transfer means 108 is arranged to mechanically transfer the relative rotation between the stator 102 and the rotor 104 via a gearbox 118 so that the speed of the rotation transferred by the transfer means 108 is adapted to the working speed of the generator 106.

The electric power produced by the generator 106 can be used in a number of different applications which need electrical power to work. The expression "applications" may in this context be seen as electrical functions which need electrical power for its functioning. Examples of such electrical functions are processors, active sensors, control systems, wired and wireless communication means (e.g. antennas, amplifiers, encoders/decoders, etc.), etc. Therefore, in one embodiment of the invention, the generator 106 and/or the battery charger 114 is arranged to power at least one electrical function of the rotator 100 and/or the tool 200, e.g. by means of suitable power coupling (such as power cables) between the generator 106 and/or the battery 112 to mentioned electrical functions. Also electrical functions in the link between the rotator 100 may be powered. One example of a function in the link may be a weighing function which may be integrated in the link. The link may also include a radio device which transmits signals (comprising weighing information) form the weighing function to a receiver of the machine carrying the crane.

Fig. 6 shows an exploding view of an embodiment of the present invention in the form of a hydraulic rotator. In this embodiment the stator 102 forms the upper part of the rotator 100 and is arranged closest to the crane tip or jib (not shown in Fig. 6). The stator 102 has a diameter that is larger than the diameter of the rotor 104 and partially encloses the upper part of the rotor 104. The rotor 104 therefore forms the lower part of the rotator 100 and is arranged closest to the tool 200 (not shown in Fig. 6). The transfer means 108 is in this example a cog wheel with a driving axis coupled to the generator 106 for driving mentioned generator 106. The cog wheel of the transfer means 108 in operation interacts with the corresponding cogs of a large cog wheel arranged on the stator 102. Under the large cog wheel located between the stator 102 and the rotor 104 a protective (circular) plate 126 is arranged so that dirt or debris cannot penetrate into the large cog wheel or other parts of the rotator. The protective plate 126 comprises a through hole 128 in which the driving axis of the transfer means 108 extends. The large cog wheel and its corresponding protective plate 126 has a diameter that is larger than the diameter for the rotor 104. This configuration provides a compact space saving solution with good protection for the parts of the rotator against dirt and mechanical impact.

Fig. 6 also shows the securing means 122 for securing the hydraulic tool 200 to the rotator. Moreover, a protective housing 124 intended to cover the outside of the stator 102 is shown in Fig. 6. The protective housing 124 together with the protective plate protect the large cog wheel and other parts of the rotator.

The embodiment shown in Fig. 6 also comprises a plurality of batteries 112, in this particular case uniformly arranged (other configurations are also possible) in a circle at the stator 102. Outside the circle of batteries 112, a number of bolts 130 are also uniformly arranged in a circle having a larger diameter than the circle on which the batteries 112 are arranged. The bolts 130 hold the upper and the lower parts of the hydraulic motor of the hydraulic rotator together.

Fig. 7 shows an exploding view of yet another embodiment of the present invention in the form of a hydraulic rotator. The rotator shown in Fig. 7 differs from the one in Fig. 6 in that the generator 106 is in this case arranged at the securing means 122 which rotates with the rotor 104. Hence, the cog wheel is in this case arranged at the underside of the stator 102 close to the interface between the stator 102 and the rotor. Thereby, the cog wheel is rotatably arranged with the stator 102. Also, a dedicated generator protector 132 is arranged on the rotator 100.

The generator protector 132 partially encloses the generator 106 in the radial direction for protecting the same. The generator protector 132 is removably arranged at the securing means 122 in this particular example. This simplifies the maintenance of the generator 106.

Finally, it should be understood that the present invention is not limited to the embodiments described above, but also relates to and incorporates all embodiments within the scope of the appended independent claim.

## Claims

1. A rotator (100) for a jib-carried hydraulic tool (200), said rotator (100) comprising:
engagement means (120, 122) for engagement with corresponding engagement means located on the jib-carried tool (200) or on a crane tip;
a stator (102);
a rotor (104) rotatably arranged relative to said stator (102); **characterised in that** further comprising
a generator (106); and
transfer means (108) mechanically coupled to said generator (106), wherein said transfer means (108) is arranged to mechanically transfer the relative rotation between said stator (102) and said rotor (104) to said generator (106) so as to drive said generator (106).

2. Rotator (100) according to claim 1, wherein said transfer means (108) is any of a driving axis, a driving belt, a gear wheel, and a friction driver.

3. Rotator (100) according to claim 1 or 2, wherein said generator (106) is arranged on said stator (102) and said transfer means (108) is driven by driving means (110) circumferentially arranged on said rotor (104) or on a part arranged to rotate with said rotor (104), or vice versa.

4. Rotator (100) according to claim 3, wherein said driving means (110) is a gear ring or a driving ring.

5. Rotator (100) according to claim 3 or 4, wherein said generator (106) is integrated in said stator (102) or in said rotor (104) in a common protective housing (124) of said stator (102) or said rotor (104).

6. Rotator (100) according to any of the preceding claims, further comprising at least one battery (112) and at least one battery charger (114) being electrically coupled to said generator (106) and further being arranged for charging said at least one battery (112).

7. Rotator (100) according to any of the preceding claims, wherein said generator (106) and/or said at least one battery charger (114) is arranged to power at least one electrical function of said rotator (100) and/or said tool (200).

8. Rotator (100) according to any of the preceding claims, wherein said transfer means (108) is arranged to mechanically transfer the relative rotation via a gearbox (118).

9. System (300) comprising a rotator (100) according to any of the preceding claims and a jib-carried hydraulic tool (200).

## Patentansprüche

1. Rotator (100) für ein auslegergetragenes hydraulisches Werkzeug (200), wobei der Rotator (100) umfasst:
ein Eingriffsmittel (120, 122) zum Eingriff mit entsprechenden Eingriffsmitteln, die sich am auslegergetragenen Werkzeug (200) oder an einer Kranspitze befinden;
einen Stator (102);
einen Rotor (104), der relativ zum Stator (102) drehbar angeordnet ist; **dadurch gekennzeichnet, dass** er ferner umfasst
einen Generator (106); und
ein Übertragungsmittel (108), das mechanisch mit dem Generator (106) gekoppelt ist, wobei das Übertragungsmittel (108) dazu angeordnet ist, die relative Drehung zwischen dem Stator (102) und dem Rotor (104) mechanisch auf den Generator (106) zu übertragen, um den Generator (106) anzutreiben.

2. Rotator (100) gemäß Anspruch 1, wobei das Übertragungsmittel (108) eines von einer Antriebsachse, einem Antriebsriemen, einem Zahnrad und einem Reibungsantrieb ist.

3. Rotator (100) gemäß Anspruch 1 oder 2, wobei der Generator (106) auf dem Stator (102) angeordnet ist und das Übertragungsmittel (108) durch ein Antriebsmittel (110) angetrieben wird, das in Umfangsrichtung auf dem Rotor (104) oder auf einem Teil angeordnet sind, das dazu angeordnet ist, sich mit dem Rotor (104) zu drehen, oder umgekehrt.

4. Rotator (100) gemäß Anspruch 3, wobei das Antriebsmittel (110) ein Zahnkranz oder ein Antriebsring ist.

5. Rotator (100) gemäß Anspruch 3 oder 4, wobei der Generator (106) im Stator (102) oder im Rotor (104) in einem gemeinsamen Schutzgehäuse (124) des Stators (102) oder des Rotors (104) integriert ist.

6. Rotator (100) gemäß einem der vorhergehenden Ansprüche, ferner umfassend mindestens einen Akku (112) und mindestens ein Akkuladegerät (114), das elektrisch mit dem Generator (106) gekoppelt und ferner zum Laden des mindestens einen Akkus (112) angeordnet ist.

7. Rotator (100) gemäß einem der vorhergehenden Ansprüche, wobei der Generator (106) und/oder das mindestens eine Akkuladegerät (114) dazu eingerichtet ist, mindestens eine elektrische Funktion des Rotators (100) und/oder des Werkzeugs (200) zu erzeugen.

8. Rotator (100) gemäß einem der vorhergehenden Ansprüche, wobei das Übertragungsmittel (108) dazu angeordnet ist, die relative Drehung mechanisch über ein Getriebe (118) zu übertragen.

9. System (300) umfassend einen Rotator (100) gemäß einem der vorhergehenden Ansprüche und ein auslegergetragenes hydraulisches Werkzeug (200).

## Revendications

1. Rotateur (100) pour un outil hydraulique porté sur une flèche de grue (200), ledit rotateur (100) comprenant :
des moyens de prise (120, 122) pour une prise avec des moyens de prise correspondants situés sur l'outil porté par une flèche de grue (200) ou sur une pointe de grue ;
un stator (102) ;
un rotor (104) disposé en rotation par rapport audit stator (102) ; **caractérisé en ce qu'**il comprend en outre :
un générateur (106) ; et
des moyens de transfert (108) couplés mécaniquement audit générateur (106), dans lequel lesdits moyens de transfert (108) sont agencés pour transférer mécaniquement la rotation relative entre ledit stator (102) et ledit rotor (104) audit générateur (106) de façon à entraîner ledit générateur (106).

2. Rotateur (100) selon la revendication 1, dans lequel lesdits moyens de transfert (108) sont l'un quelconque d'un axe d'entraînement, d'une courroie d'entraînement, d'une roue dentée ou d'un dispositif d'entraînement par friction.

3. Rotateur (100) selon la revendication 1 ou 2, dans lequel ledit générateur (106) est disposé sur ledit stator (102) et lesdits moyens de transfert (108) sont entraînés par des moyens d'entraînement (110) disposés circonférentiellement sur ledit rotor (104) ou sur une partie agencée pour tourner avec ledit rotor (104) ou vice-versa.

4. Rotateur (100) selon la revendication 3, dans lequel lesdits moyens d'entraînement (110) sont constitués d'une bague à engrenages ou d'une bague d'entraînement.

5. Rotateur (100) selon la revendication 3 ou 4, dans lequel ledit générateur (106) est intégré dans ledit stator (102) ou dans ledit rotor (104) dans un boîtier de protection commun (124) dudit stator (102) ou dudit rotor (104).

6. Rotateur (100) selon l'une quelconque des revendications précédentes, comprenant en outre au moins une batterie (112) et au moins un chargeur de batterie (114) couplé électriquement audit générateur (106) et étant en outre agencé pour charger ladite au moins une batterie (112).

7. Rotateur (100) selon l'une quelconque des revendications précédentes, dans lequel ledit générateur (106) et/ou ledit au moins un chargeur de batterie (114) est agencé pour alimenter au moins une fonction électrique dudit rotateur (100) et/ou dudit outil (200).

8. Rotateur (100) selon l'une quelconque des revendications précédentes, dans lequel lesdits moyens de transfert (108) sont agencés pour transférer mécaniquement la rotation relative par le biais d'une boîte d'engrenages (118).

9. Système (300) comprenant un rotateur (100) selon l'une quelconque des revendications précédentes et un outil hydraulique porté sur une flèche de grue (200).
